# EUROPÄISCHE PATENTSCHRIFT

(11) **EP 2 946 828 B1**
(45) Veröffentlichungstag und Bekanntmachung des Hinweises auf die Patenterteilung: **29.03.2017**
(21) Anmeldenummer: 15166335.8
(22) Anmeldetag: 05.05.2015
(51) Int. Cl.: B01D 53/06, B01D 53/73, F23G 7/06, B01D 53/75

(54) **VERFAHREN ZUR REINIGUNG EINES OXIDIERBARE BESTANDTEILE ENTHALTENEN ROHGASVOLUMENSTROMS SOWIE ZUGEHÖRIGE VORRICHTUNG**
METHOD FOR THE PURIFICATION OF A FLOW OF INPUT GAS CONTAINING OXIDISABLE COMPONENTS AND ASSOCIATED DEVICE
PROCÉDÉ DE NETTOYAGE D'UN DÉBIT DE GAZ BRUT CONTENANT DES COMPOSANTS OXYDABLES ET DISPOSITIF CORRESPONDANT

(30) Priorität: 19.05.2014 DE 102014107030
(43) Veröffentlichungstag der Anmeldung: 25.11.2015
(73) Patentinhaber: Caverion Deutschland GmbH, 80992 München (DE)
(72) Erfinder: Gores, Stefan, 52070 Aachen (DE); Juchmann, Norbert, 52134 Herzogenrath (DE)
(74) Vertreter: Bauer, Dirk

(56) Entgegenhaltungen:
- DE-B3-102005 048 298
- DE-C1- 19 716 877
- US-A- 5 453 259

## Beschreibung

### Einleitung

Die vorliegende Erfindung betrifft ein Verfahren zur Reinigung eines oxidierbare Bestandteile enthaltenen Rohgasvolumenstroms, bei dem ein erster Rohgasvolumenstrom entlang einer Oberfläche eines Adsorbens geleitet wird, wobei sich oxidierbare Bestandteile des ersten Rohgasvolumenstroms an das Adsorbens anlagern, wodurch der erste Rohgasvolumenstrom in einen ersten Reingasvolumenstrom umgewandelt wird, wobei die sich an das Adsorbens angelagerten oxidierbaren Bestandteile zu einem späteren Zeitpunkt mittels eines Desorptionsvolumenstroms von dem Adsorbens desorbiert werden, wodurch der Desorptionsvolumenstrom in einen zweiten Rohgasvolumenstrom umgewandelt wird, wobei des Weiteren der zweite Rohgasvolumenstrom durch eine erste Wärmespeichermasse geleitet wird, wodurch eine Temperatur des zweiten Rohgasvolumenstroms erhöht wird, anschließend der zweite Rohgasvolumenstrom in eine Reaktionskammer geleitet wird, in der die in dem zweiten Rohgasvolumenstrom befindlichen oxidierbaren Bestandteile oxidiert werden, wodurch der zweite Rohgasvolumenstrom in einen zweiten Reingasvolumenstrom umgewandelt wird, wobei der zweite Reingasvolumenstrom danach zumindest teilweise durch eine zweite Wärmespeichermasse geleitet wird, wodurch eine Temperatur des durch die zweite Wärmespeichermasse geleiteten Anteils des zweiten Reingasvolumenstroms erniedrigt wird, und der zweite Reingasvolumenstrom in einen Reingaskanal eingeleitet wird, wobei eine Durchströmungsrichtung der ersten Wärmespeichermasse, der Reaktionskammer und der zweiten Wärmespeichermasse periodisch umgekehrt wird, wobei das Adsorbens zumindest während eines Teils der Dauer eines Vorgangs der Umkehrung der Durchströmungsrichtung als Zwischenspeicher für eine Menge oxidierbarer Bestandteile verwendet wird, wobei ein auf die Masse des Adsorbens bezogener Beladungsgrad zumindest eines Teils des Adsorbens mit oxidierbaren Bestandteilen nach der Verwendung des Adsorbens als Zwischenspeicher höher ist, als ein maximaler Beladungsgrad ohne eine solche Verwendung des Adsorbens als Zwischenspeicher.

Ferner wird eine Vorrichtung zur Reinigung eines oxidierbare Bestandteile enthaltenen Rohgasvolumenstroms offenbart, umfassend ein Adsorbens, eine erste Wärmespeichermasse, eine Reaktionskammer sowie eine zweite Wärmespeichermasse, wobei ein erster Rohgasvolumenstrom mittels eines Rohgaskanals dem Adsorbens zuleitbar und derart entlang einer Oberfläche des Adsorbens leitbar ist, dass in dem ersten Rohgasvolumenstrom befindliche oxidierbare Bestandteile an dem Adsorbens anlagerbar sind, wodurch der erste Rohgasvolumenstrom in einen ersten Reingasvolumenstrom umwandelbar ist, wobei an dem Adsorbens angelagerte oxidierbare Bestandteile mittels eines Desorptionsvolumenstroms derart von dem Adsorbens desorbierbar sind, dass der Desorptionsvolumenstrom in einen zweiten Rohgasvolumenstrom umwandelbar ist, wobei der zweite Rohgasvolumenstrom in die erste Wärmespeichermasse leitbar ist, sodass eine Temperatur des zweiten Rohgasvolumenstroms erhöhbar ist, anschließend der zweite Rohgasvolumenstrom in die Reaktionskammer leitbar ist, in der die in dem zweiten Rohgasvolumenstrom befindlichen oxidierbaren Bestandteile derart oxidierbar sind, dass der zweite Rohgasvolumenstrom in einen zweiten Reingasvolumenstrom umwandelbar ist, wobei der zweite Reingasvolumenstrom zumindest teilweise in eine zweite Wärmespeichermasse leitbar ist, sodass eine Temperatur eines in die zweite Wärmespeichermasse geleiteten Anteils des zweiten Reingasvolumenstroms erniedrigbar ist, und der zweite Reingasvolumenstrom in einen Reingaskanal einleitbar ist, wobei eine Durchströmungsrichtung der ersten Wärmespeichermasse, der Reaktionskammer und der zweiten Wärmespeichermasse periodisch umkehrbar ist, wobei zumindest während eines Teils der Dauer eines Vorgangs der Umkehrung der Durchströmungsrichtung das Adsorbens als Zwischenspeicher für eine Menge oxidierbarer Bestandteile verwendbar ist, wobei ein auf die Masse des Adsorbens bezogener Beladungsgrad zumindest eines Teils des Adsorbens mit oxidierbaren Bestandteilen nach der Verwendung des Adsorbens als Zwischenspeicher höher ist, als ein maximaler Beladungsgrad ohne eine solche Verwendung des Adsorbens als Zwischenspeicher.

### Stand der Technik

Das Verfahren sowie die Vorrichtung der eingangs beschriebenen Art sind aus der Praxis bereits bekannt. Beide finden ihre Anwendung in solchen Bereichen, in denen ein Rohgasvolumenstrom (Abluft) erzeugt wird, der mit lediglich einer geringen Konzentration oxidierbarer Bestandteile beladen ist, gleichwohl diese Konzentration auf einem derart hohen Niveau liegt, dass der Rohgasvolumenstrom nicht unbehandelt in die Umwelt geleitet werden darf. Typische Gebiete, auf denen solche Rohgasvolumenströme erzeugt werden, sind beispielsweise die Lackierindustrie, die Halbleiterindustrie und die Druck- und Beschichtungsindustrie.

Ein Rohgasvolumenstrom mit einer zu geringen Konzentration oxidierbarer Bestandteile ist nicht dazu geeignet, in einer üblichen regenerativen Nachverbrennungsanlage ("RNV-Anlage") behandelt zu werden, da die Konzentration der oxidierbaren Bestandteile nicht ausreicht, um einen Verbrennungsprozess in wirtschaftlicher Weise aufrecht zu erhalten; der Energiegehalt des Rohgasvolumenstroms ist hierfür schlicht zu gering, sodass für eine Behandlung mittels einer RNV-Anlage externe Prozessenergie eingebracht werden müsste.

Gleichwohl ist die Anwendung von RNV-Anlagen grundsätzlich gewünscht. Die Verbrennung der oxidierbaren Bestandteile und eine damit einhergehende Reinigung der des jeweiligen Rohgasvolumenstroms ist - sofern sich der Prozess weitestgehend selbst erhält, das heißt ohne die Notwendigkeit externer Energiezufuhr - deutlich wirtschaftlicher, als eine Abluftbehandlung beispielsweise mittels der Verwendung von Filtersystemen. Letztere erzeugen durch deren Austausch und Entsorgung erhebliche Kosten.

Mittels des eingangs beschriebenen Verfahrens und der zugehörigen Vorrichtung ist es möglich, "zu schwach" konzentrierte Rohgasvolumenströme mit oxidierbaren Bestandteilen anzureichern und auf diese Weise für eine wirtschaftliche Behandlung in einer RNV-Anlage vorzubereiten. Der besondere Vorteil ist dabei, dass die oxidierbaren Bestandteile, mit denen der Rohgasvolumenstrom angereichert wird, nicht aus einer externen Quelle (beispielsweise durch Zugabe von Erdgas) stammen, sondern direkt aus dem Rohgasvolumenstrom entnommen werden. Im Einzelnen besteht die Grundidee darin, einem Rohgasvolumenstrom mit einer geringen Konzentration oxidierbarer Bestandteile selbige mittels Verwendung eines Adsorbens zu entziehen und den Rohgasvolumenstrom auf diese Weise zu reinigen, sodass er ohne zusätzlich Behandlung der Umwelt zugeführt werden kann. Das Adsorbens wird im Zuge dieses Prozesses mit den oxidierbaren Bestandteilen entsprechend angereichert. Diese an dem Adsorbens anlagernden oxidierbaren Bestandteile werden sodann mittels eines Desorptionsvolumenstroms von dem Adsorbens desorbiert, wobei die Konzentration der in dem Desorptionsvolumenstrom (bzw. zweiten Rohgasvolumenstrom) befindlichen oxidierbaren Bestandteile ohne Weiteres so stark gesteigert werden kann, dass dieser zweite Rohgasvolumenstrom mittels einer RNV-Anlage nachbehandelbar ist, das heißt ein autothermer Betrieb derselben möglich ist. Entsprechende Anlagen sind beispielsweise den Dokumenten DE 197 16 877 C1 und DE 10 2005 048 298 B3 entnehmbar.

Im Ergebnis bedeutet dies, dass ein Rohgasvolumenstrom mit geringer Konzentration oxidierbarer Bestandteile in einen ersten, reinen Anteil und einen zweiten, umso stärker belasteten Anteil aufgeteilt wird. Der reine Anteil kann direkt in die Umwelt geleitet werden, während der stärker belastete Anteil der RNV-Anlage zugeführt wird, die in Gegenwart der erhöhten Konzentration der oxidierbaren Bestandteile wirtschaftlich arbeiten kann, das heißt typischerweise autotherm betrieben werden kann.

Das bekannte Verfahren und die bekannte Vorrichtung sind allerdings insoweit nachteilig, als die hierfür benötigte RNV-Anlage für einen schwach belasteten Rohgasvolumenstrom verhältnismäßig hohe Investitionskosten verursacht, da der letztendlich übrig bleibende aufkonzentrierte zweite Rohgasvolumenstrom kleiner ist als der ursprüngliche gesamte Rohgasvolumenstrom. Dieses Missverhältnis aus Investitionskosten relativ zu dem letztendlich mittels der RNV-Anlage behandelten Rohgasvolumenstrom gilt insbesondere im Hinblick auf sogenannte "Drei-Kammer-Systeme", die dazu geeignet sind, einen fortlaufenden Reinigungsprozess des belasteten Rohgasvolumenstroms aufrecht zu erhalten, ohne dass infolge eines Wechsels der Durchströmungsrichtung der einzelnen Wärmespeichermassen ein Konzentrationspeak oxidierbarer Bestandteile in dem die RNV-Anlage verlassenden Reingasvolumenstrom entsteht. Entsprechende Peaks sind in jedem Fall zu vermeiden.

### Aufgabe

Der vorliegenden Erfindung liegt somit die Aufgabe zugrunde, ein Verfahren sowie eine Vorrichtung der eingangs beschriebenen Art bereitzustellen, die eine ebenso hohe Reinigungsleistung (ohne Auftreten von Konzentrationspeaks oxidierbarer Bestandteile im Reingas) aufweisen wie besagte Drei-Kammer-Systeme.

### Lösung

Die zugrunde liegende Aufgabe wird ausgehend von einem Verfahren der eingangs beschriebenen Art erfindungsgemäß dadurch gelöst, dass zumindest während eines Teils der Dauer des Vorgangs der Umkehrung der Durchströmungsrichtung der in den Reingaskanal eingeleitete Gasvolumenstrom dem ersten Rohgasvolumenstrom zugeleitet und gemeinsam mit diesem entlang einer Oberfläche des Adsorbens geleitet wird, wodurch sich die in dem Gasvolumenstrom enthaltenen oxidierbaren Bestandteile an das Adsorbens anlagern.

Dieses erfindungsgemäße Verfahren basiert zunächst auf dem Wunsch, nicht etwa eine RNV-Anlage nach dem Drei-Kammer-System, sondern lediglich eine solche nach dem Zwei-Kammer-System zu verwenden. Derartige Anlagen sind erheblich günstiger und können folglich selbst von kleineren Betrieben genutzt werden, selbst wenn die dort anfallenden Konzentrationen oxidierbarer Bestandteile vergleichsweise gering sind. Zwei-Kammer-Systeme sind jedoch im Vergleich zu Drei-Kammer-Systemen systembedingt stets mit dem Nachteil eines Konzentrationspeaks im Zuge der Umkehr der Durchströmungsrichtung der RNV-Anlage behaftet. Dieser Konzentrationspeak ergibt sich im Wesentlichen aus zwei Faktoren: Zum einen kommt es im Zuge der Umkehr der Durchströmungsrichtung dazu, dass bereits in die RNV-Anlage eingetretenes Rohgas, das noch nicht bis in die Reaktionskammer vorgedrungen ist, direkt aus der RNV-Anlage wieder heraus geleitet wird, ohne dass die in diesem Rohgas befindlichen oxidierbaren Bestandteile oxidiert worden sind. Dieses belastete Rohgas gelangt direkt in den Reingaskanal und anschließend in die Umwelt. Zum anderen kommt es im Zuge der Umkehr der Durchströmungsrichtung zu einem Kurzschluss zwischen der Rohgaszufuhr der RNV-Anlage und dem Reingaskanal. Dies ergibt sich daraus, dass Sperrklappen der entsprechenden Gaskanäle, die sich im Zuge der Umkehr der Durchströmungsrichtung öffnen bzw. schließen, hierzu eine gewisse Zeit benötigen, während derer sowohl diesseits der ersten Wärmespeichermasse als auch diesseits der zweiten Wärmespeichermasse sowohl die Rohgaszufuhr als auch der Reingaskanal gleichzeitig teilweise geöffnet sind. Diese gleichzeitige Öffnung von Rohgaszufuhr und Reingaskanal führt dazu, dass das belastete Rohgas direkt von der Rohgaszufuhr in den daneben befindlichen Reingaskanal überströmen kann. Letzterer Effekt stellt den Hauptanteil des Konzentrationspeaks des in den Reingaskanal geratenden Gasvolumenstroms dar.

Der vorliegenden Erfindung liegt nunmehr die Idee zugrunde, den Gasvolumenstrom, der während der Umkehrung der Durchströmungsrichtung der RNV-Anlage unbeabsichtigter Weise in den Reingaskanal gelangt, wieder zu rezirkulieren und gemeinsam mit dem Rohgasvolumenstrom erneut dem Adsorbens zuzuführen. Wie vorstehend erläutert ist der Gasvolumenstrom, der während der Umkehrung der Durchströmungsrichtung der RNV-Anlage in den Reingaskanal gerät, unbehandelt, das heißt nach wie vor mit oxidierbaren Bestandteilen beladen. Die Rezirkulation dieses "Reingasvolumenstrom", der gerade nicht von Reingas, sondern von belastetem Rohgas gebildet ist, führt nunmehr dazu, dass dieses Rohgas nicht in die Umwelt gelangt, sondern den Reinigungsprozess der Adsorption abermals durchlaufen muss. Sinnvollerweise wird die Rezirkulation des Reingasvolumenstroms erst mit Abschluss der Umkehrung der Durchströmungsrichtung gestoppt, sodass während der gesamten Dauer der Umkehrung kein Gas in die Umwelt gelangt. Die Beschickung des Adsorbens sowie der RNV-Anlage kann durchgehend aufrechterhalten werden. Eine Abschaltung der Rohgaszufuhr ist nicht erforderlich.

Mit anderen Worten trägt das erfindungsgemäße Verfahren dem oben erläuterten systembedingten Problem des Zwei-Kammer-Systems Rechnung, dass im Zuge der Umkehr der Durchströmungsrichtung desselben in jedem Fall eine gewisse Menge oxidierbarer Bestandteile in den Reingaskanal gelangt. Gemäß dem erfindungsgemäßen Verfahren wird nunmehr dieser in den Reingaskanal gelangende, belastete Gasvolumenstrom rezirkuliert, das heißt ausgehend von dem Reingaskanal wieder dem Adsorbens zugeführt, während ein Austritt des Gasvolumenstroms ausgehend von dem Reingaskanal in die Umwelt blockiert wird. Der Gasvolumenstrom wird sodann an einer Oberfläche des Adsorbens entlang geleitet, wobei die in dem Gasvolumenstrom enthaltenen oxidierbaren Bestandteile an dem Adsorbens angelagert werden. Im Übrigen wird das Verfahren zur Reinigung des Rohgasvolumenstroms unterschiedslos aufrechterhalten; es ist weder eine Zwischenspeicherung eines bestimmten Gasvolumens noch eine Unterbrechung des Rohgasvolumenstroms notwendig. Sobald der Prozess der Umkehr der Durchströmungsrichtung abgeschlossen ist, gelangt vorerst wieder nur solches Gas in den Reingaskanal, welches frei von oxidierbaren Bestandteilen ist ("zweiter Reingasvolumenstrom" im Sinne des Anspruchs 1). Der erste Reingasvolumenstrom kann durchgehend aufrechterhalten werden, das heißt selbst während der Dauer der Umkehr der Durchströmungsrichtung. Folglich kommt es zu keiner Zeit dazu, dass belastetes Gas in die Umwelt geleitet wird. Die Reinigungsleistung einer Anlage, die unter Verwendung des erfindungsgemäßen Verfahrens betrieben wird, weist folglich eine mit bekannten Drei-Kammer-Systemen vergleichbare Reinigungsleistung auf. Das erfindungsgemäße Verfahren löst folglich die zugrunde liegende Aufgabe.

Hierbei kann es besonders vorteilhaft sein, wenn der in den Reingaskanal eingeleitete Gasvolumenstrom durchgehend entlang einer Oberfläche des Adsorbens geleitet wird, das heißt nicht nur während der Umkehrung der Durchströmungsrichtung bzw. während eines Teils derselben. Der Begriff "durchgehend" ist in diesem Zusammenhang zeitlich zu verstehen. Durchgehend heißt demzufolge so viel wie fortwährend oder dauerhaft. Dieses Vorgehen erfüllt gleichermaßen den Zweck der Verhinderung einer ungewollten Entweichung eines belasteten Gasvolumenstroms. Hinzu kommt, dass selbst in Betriebszeiten der Vorrichtung, in denen das Rohgas ordnungsgemäß behandelt wird, der entstehende Reingasvolumenstrom abermals entlang einer Oberfläche des Adsorbens geführt wird. Auf diese Weise kann ein in dem Reingasvolumenstrom enthaltener Rest oxidierbarer Bestandteile zusätzlich reduziert und mithin die Reinigungsleistung der Anlage weiter verbessert werden. Hinzu kommt, dass es anlagentechnisch ungleich einfacher ist, den Reingasvolumenstrom dauerhaft, das heißt durchgehend, über das Adsorbens zu leiten und nicht nur während eines bestimmten Zeitraums, nämlich während der Dauer der Umkehrung der Durchströmungsrichtung.

In einer vorteilhaften Variante des erfindungsgemäßen Verfahrens wird eine durch Desorption der oxidierbaren Bestandteile von dem Adsorbens erfolgende Erzeugung des zweiten Rohgasvolumenstroms zumindest während eines Teils der Dauer der Umkehrung der Durchströmungsrichtung unterbrochen und die erste Wärmespeichermasse und/oder die zweite Wärmespeichermasse mittels eines Spülgasvolumenstroms gespült, wobei eine Adsorption der in dem ersten Rohgasvolumenstrom enthaltenen oxidierbaren Bestandteile an das Adsorbens währenddessen weitergeführt wird.

Mittels dieses Vorgehen besteht die Möglichkeit, die RNV-Anlage mit ihren zwei Kammern z.B. vor der Umkehr der Durchströmungsrichtung oder zu einem sonstigen Zeitpunkt vollständig "freizuspülen", das heißt die RNV-Anlage anstelle des belasteten zweiten Rohgasvolumenstroms mit einem völlig unbelasteten Spülgasvolumenstrom zu beschicken und dabei den zweiten Rohgasvolumenstrom vollständig zu versperren. Sobald der Spülgasvolumenstrom aktiviert und der zweite Rohgasvolumenstrom deaktiviert sind, werden noch letzte in der RNV-Anlage befindliche oxidierbare Bestandteile oxidiert, sodass die RNV-Anlage alsbald lediglich mit Spülgas beaufschlagt ist. Mittels dieses Verfahrens ist es z.B. denkbar, den Reingaskanal und/oder den Rezirkulationskanal nach einer gewissen Betriebszeit der Vorrichtung zu spülen.

Das Verfahren ist weiterhin dann besonders vorteilhaft, wenn der zweite Rohgasvolumenstrom kleiner ist als der erste Rohgasvolumenstrom. Ein solches Verhältnis der Rohgasvolumenströme zueinander ermöglicht es, dass durchgehend ein gegenüber dem ersten Rohgasvolumenstrom "aufkonzentrierter" zweiter Rohgasvolumenstrom erzeugbar ist.

Grundsätzlich ist es denkbar, den Desorptionsvolumenstrom, der schließlich in den zweiten Rohgasvolumenstrom umgewandelt wird, von "irgendeinem" Gasvolumenstrom zu bilden, beispielsweise von unbehandelter Außenluft. Im Ergebnis ist es nur entscheidend, dass mittels der Desorption der an dem Adsorbens angelagerten oxidierbaren Bestandteile ein zweiter Rohgasvolumenstrom erzeugt wird, der eine solche Belastung oxidierbarer Bestandteile aufweist, dass die RNV-Anlage wirtschaftlich betreibbar ist. Idealerweise ist die Belastung so hoch, dass die RNV-Anlage autotherm betrieben werden kann.

Besonders vorteilhaft ist es dabei, wenn der Desorptionsvolumenstrom von einem Anteil des Rohgasvolumenstroms gebildet wird. Zum einen ist es bei einer solchen Konstellation nicht notwendig, eine zusätzliche Fördereinrichtung für den Desorptionsvolumenstrom vorzusehen; stattdessen kann der Effekt der Fördereinrichtung des Rohgasvolumenstroms verwendet werden. Zum anderen weist der Rohgasvolumenstrom bereits eine gewisse Konzentration an oxidierbaren Bestandteilen auf, der sich zu dem von dem Adsorbens desorbierten Anteil addiert. Somit ist ein umso stärker aufkonzentrierter zweiter Rohgasvolumenstrom erzeugbar.

In einem besonders vorteilhaften Verfahren wird der Desorptionsvolumenstrom, vorzugsweise auf mindestens 100 °C, weiter vorzugsweise auf mindestens 120 °C, erwärmt. Die Erwärmung des Desorptionsvolumenstroms bewirkt eine deutlich verbesserte Desorptionswirkung. Mit anderen Worten kann ein erwärmter Desorptionsvolumenstrom deutlich mehr oxidierbare Bestandteile von der Oberfläche des Adsorbens desorbieren, als dies mittels eines vergleichsweise kühlen Desorptionsvolumenstroms möglich wäre. Ein optimales Temperaturniveau des Desorptionsvolumenstroms liegt bei ca. 200 °C.

Die Temperatur eines typischen Rohgasvolumenstroms liegt bei ca. 20 °C bis 45 °C. Soweit ein Anteil des Rohgasvolumenstroms als Desorptionsvolumenstrom verwendet wird, ist somit beispielsweise eine Erwärmung desselben von 20 °C auf die vorstehend genannten Bereiche vorteilhaft. Soweit ein Außenluftstrom als Desorptionsvolumenstrom verwendet wird, ist die Differenz zwischen Soll- und Ist-Temperatur sogar entsprechend höher. Eine derartige Erwärmung des Desorptionsvolumenstroms kann besonders einfach mittels eines Heizregisters vorgenommen werden. Dies hat allerdings den Nachteil, dass es zusätzliche Energie benötigt. Daher ist es besonders vorteilhaft, wenn der Desorptionsvolumenstrom mittels Wärmeenergie zumindest eines Anteils des zweiten Reingasvolumenstroms erwärmt wird, wobei der Anteil des zweiten Reingasvolumenstroms vorzugsweise mittels eines Bypasskanals aus der Reaktionskammer entnommen wird. Diesem Vorgehen liegt die Idee zugrunde, die in der Reaktionskammer vorherrschenden Temperaturen (ca. 850 °C) dazu zu nutzen, den Desorptionsvolumenstrom zu erzeugen. Mittels des genannten Bypasskanals kann zumindest ein Anteil des zweiten Reingasvolumenstroms, der in etwa die Temperatur der Reaktionskammer aufweist, einem Wärmetaucher zugeführt werden, mittels dessen die Wärmeenergie von dem zweiten Anteil des zweiten Reingasvolumenstroms auf den Desorptionsvolumenstrom übertragen wird. Der Betrieb eines zusätzlichen Heizregisters entfällt somit. Diesem Vorgehen sind nur insoweit Grenzen gesetzt, als der jeweiligen Wärmespeichermasse, die von dem heißen zweiten Reingasvolumenstrom durchströmt werden soll, noch ausreichend Wärmeenergie zugeführt wird, sodass diese nicht auskühlt.

Aus vorrichtungstechnischer Sicht wird die zugrunde liegende Aufgabe erfindungsgemäß mittels eines Rezirkulationskanal gelöst, mittels dessen ein in dem Reingaskanal befindlicher Gasvolumenstrom dem Rohgaskanal zuleitbar ist und mittels des Rohgaskanals derart auf das Adsorbens führbar ist, dass der Gasvolumenstrom entlang einer Oberfläche des Adsorbens leitbar ist. Mittels einer solchen Vorrichtung ist das erfindungsgemäße Verfahren besonders einfach ausführbar. Der Rezirkulationskanal dient dazu, den belasteten "Reingasvolumenstrom", das heißt den Gasvolumenstrom, der im Zuge der Umkehr der Durchströmungsrichtung der RNV-Anlage unbehandelt in den Reingaskanal gelangt ist, wieder zurück auf das Adsorbens zu leiten.

In einer vorteilhaften Ausgestaltung der erfindungsgemäßen Vorrichtung weist selbige einen Bypasskanal auf, mittels dessen zumindest ein Anteil des zweiten Reingasvolumenstroms der Reaktionskammer entnehmbar ist, wobei vorzugsweise der mittels des Bypasskanals entnommene Anteil des zweiten Reingasvolumenstroms einem Wärmetauscher oder einer Mischkammer zuführbar ist, wobei mittels des Wärmetauschers bzw. der Mischkammer Wärmeenergie zwischen dem Anteil des zweiten Reingasvolumenstroms und dem Desorptionsvolumenstrom austauschbar ist. Mittels einer solchen Vorrichtung ist es besonders einfach, den Desorptionsvolumenstrom zu erwärmen, wie vorstehend bereits erläutert ist.

In einer vorteilhaften Ausgestaltung der erfindungsgemäßen Vorrichtung ist das Adsorbens auf einem Rotor angeordnet, der derart um eine Rotationsachse rotierbar ist, dass der erste Rohgasvolumenstrom und/oder der Desorptionsvolumenstrom über die Zeit eines Betriebs der Vorrichtung entlang verschiedener Oberflächen des Adsorbens leitbar ist, wobei vorzugsweise der erste Rohgasvolumenstrom und der Desorptionsvolumenstrom in jedem Fall entlang unterschiedlicher Oberflächen des Adsorbens strömen.

Es ergibt sich aus dem zugrunde liegenden Prinzip der Verwendung des Adsorbens als Zwischenspeicher, dass sowohl eine Beladung (Adsorption) als auch eine Entladung (Desorption) des Speichers möglich sein muss. Das heißt, dass jeweilige Oberflächen des Adsorbens über die Dauer des Betriebs der Vorrichtung hinweg mal beladen und mal entladen werden. Folglich ist es notwendig, über bestimmte Zeiträume hinweg jeweilige Oberflächen des Adsorbens mit dem ersten Rohgasvolumenstrom zu beschicken und auf diese Weise die jeweilige Oberfläche mit oxidierbaren Bestandteilen anzureichern. Später müssen diese oxidierbaren Bestandteile wieder desorbiert werden und zwar mittels des Desorptionsvolumenstroms. Daher muss dieselbe Oberfläche zu irgendeinem Zeitpunkt mit dem Desorptionsvolumenstrom beschickt werden. Eine solche zyklische Beschickung einer jeweiligen Oberfläche abwechselnd mit dem ersten Rohgasvolumenstrom und dem Desorptionsvolumenstrom ist besonders einfach, wenn der Träger des Adsorbens beweglich ist und sich fortwährend derart bewegt, dass eine jeweilige Oberfläche des Adsorbens sich mal in einem Strömungsbereich des ersten Rohgasvolumenstroms und mal in einem Strömungsbereich des Desorptionsvolumenstroms befindet. Der genannte Rotor eignet sich hierfür besonders gut, da lediglich eine einzige Bewegung um eine Rotationsachse ausgeführt werden muss und die Strömungsbereiche vom ersten Rohgasvolumenstrom und vom Desorptionsvolumenstrom besonders einfach entlang von Teilbereichen einer vom Rotor beschriebenen Kreisbewegung angeordnet werden können.

Ebenso ist es denkbar, dass das Adsorbens auf einem Festbett angeordnet ist, wobei der erste Rohgasvolumenstrom und/oder der Desorptionsvolumenstrom derart auf das Adsorbens leitbar sind, dass sie über die Zeit entlang wechselnder Oberflächen des Adsorbens strömen, wobei vorzugsweise der erste Rohgasvolumenstrom und der Desorptionsvolumenstrom in jedem Fall entlang unterschiedlicher Oberflächen des Adsorbens strömen. Im Ergebnis werden auch hier jeweilige Oberflächen des Adsorbens abwechselnd mit dem ersten Rohgasvolumenstrom und dem Desorptionsvolumenstrom beschickt.

### Ausführungsbeispiele

Das erfindungsgemäße Verfahren sowie die zugehörige Vorrichtung sind nachfolgend anhand eines Ausführungsbeispiels, das in der Figur dargestellt ist, näher erläutert. Es zeigt:

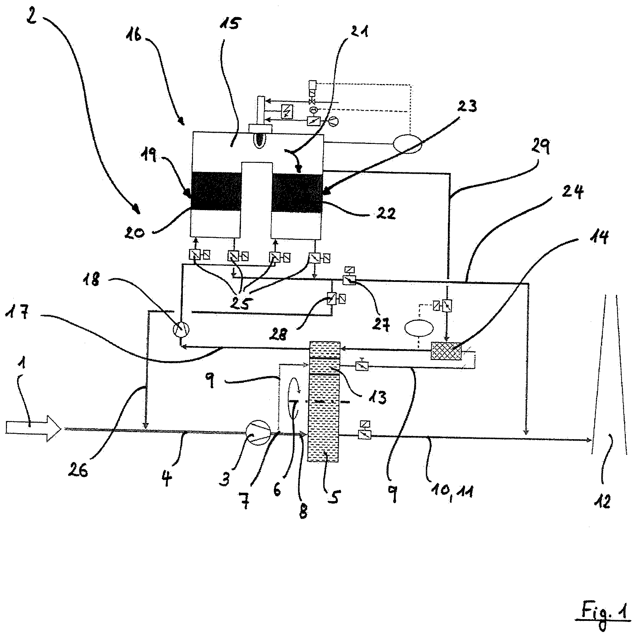

- Fig. 1:: Ein Schaltdiagramm einer erfindungsgemäßen Vorrichtung.

In einem Ausführungsbeispiel, das in Form eines Schaltdiagramms in Figur 1 dargestellt ist, wird ein Rohgasvolumenstrom 1 einer Vorrichtung 2 zugeführt. Der Rohgasvolumenstrom **1** wird mittels eines Ventilators **3** in einem Rohgaskanal **4** bewegt. Mittels des Rohgaskanals **4** wird der Rohgasvolumenstrom **1** auf einen Rotor **5** zu geleitet, der mit einem Adsorbens (in Figur 1 nicht dargestellt) beaufschlagt ist. Der Rotor **5** weist eine Rotationsachse **6** auf, um die er rotiert. Der Rohgasvolumenstrom **1** wird an einer Zweigstelle **7** in einen ersten Rohgasvolumenstrom **8** und einen Desorptionsvolumenstrom **9** geteilt. Der erste Rohgasvolumenstrom **8** wird an einer Oberfläche des auf dem Rotor **5** befindlichen Adsorbens entlang geleitet, wobei sich in dem ersten Rohgasvolumenstrom **8** befindliche oxidierbare Bestandteile (in Figur 1 nicht dargestellt) an dem Adsorbens anlagern. Durch diese Anlagerung der oxidierbaren Bestandteile wird der erste Rohgasvolumenstrom **8** in einen ersten Reingasvolumenstrom **10** umgewandelt, der schließlich mittels eines ersten Reingaskanals **11** in Richtung eines Kamins **12** abgeleitet wird. Die Umwandlung des ersten Rohgasvolumenstroms **8** in den ersten Reingasvolumenstrom **10** erfolgt in einer quantitativen Betrachtung auf solche Weise, dass die in dem ersten Reingasvolumenstrom **10** enthaltenen oxidierbaren Bestandteile nur noch so gering konzentriert sind, dass geltende Emissionsschutznormen eingehalten werden.

Der Desorptionsvolumenstrom **9** wird zunächst durch einen warmen Bereich **13** des Rotors **5** und sodann in einen Wärmetauscher **14** geleitet. Dieser Wärmetauscher **14** wird mit heißem Reingas aus einer Reaktionskammer **15** einer RNV-Anlage **16** gespeist, wobei das heiße Reingas mittels eines Bypasskanals **29** ausgehend von der Reaktionskammer **15** zu dem Wärmetauscher **14** geleitet wird. Das heiße Reingas hat eine Temperatur von ca. 850°C. Der Desorptionsvolumenstrom **9** hat - bevor er in den Wärmetauscher **14** eintritt-eine Temperatur von ca. 110°C. Mittels der Wärmeenergie des heißen Reingases wird der Desorptionsvolumenstrom **9** auf ca. 200°C erwärmt. Mit dieser Temperatur wird der Desorptionsvolumenstrom **9** abermals auf den Rotor **5** geleitet, sodass das Rohgas, von dem der Desorptionsvolumenstrom **9** gebildet ist, an einer Oberfläche des Adsorbens entlang geleitet wird. Eine Desorptionswirkung des Desorptionsvolumenstroms **9** ist bei der erhöhten Temperatur von 200 °C besonders gut, sodass der Desorptionsvolumenstrom **9** an dem Adsorbens angelagerte oxidierbare Bestandteile desorbiert. Hierbei wird eine Konzentration oxidierbarer Bestandteile in dem Desorptionsvolumenstrom **9** derart stark gesteigert, dass er geeignet ist, einen autothermen Betrieb der RNV-Anlage **16** zu ermöglichen. Durch die Desorption der oxidierbaren Bestandteile von dem Adsorbens wird der Desorptionsvolumenstrom **9** in einen zweiten Rohgasvolumenstrom **17** umgewandelt.

Der Wärmetauscher **14** kann alternativ ebenso von einer Mischkammer gebildet sein, in der der Desorptionsvolumenstrom **9** mit dem heißen Reingas aus der Reaktionskammer **15** vermischt wird. Eine Mischkammer kann insoweit vorteilhaft sein, als sie typischerweise geringere Investitionskosten verursacht als ein Wärmetauscher.

Der zweite Rohgasvolumenstrom **17** wird mittels eines weiteren Ventilators **18** in Richtung der RNV-Anlage **16** geleitet. Dort tritt der zweite Rohgasvolumenstrom **17** zunächst in eine erste Kammer **19** ein, die eine erste Wärmespeichermasse **20** umfasst. Die erste Wärmespeichermasse **20** weist im Mittel eine Temperatur von ca. 450 °C auf, wobei sich in der Regel in den Wärmespeichermassen grundsätzlich ein Temperaturgefälle ausbildet, das sich zwischen einem Eintrittstemperaturniveau (beispielsweise ca. 50 °C) und einem Reaktionskammertemperaturniveau (beispielsweise ca. 850 °C) befindet. Indem der zweite Rohgasvolumenstrom **17** die erste Wärmespeichermasse **20** durchströmt, wird die Temperatur des zweiten Rohgasvolumenstroms **17** stark gesteigert und erreicht bei einem Austritt aus der ersten Wärmespeichermasse **20** diesseits der Reaktionskammer **15** eine Temperatur von ca. 850 °C, das heißt der Temperatur der Reaktionskammer **15.** In der Reaktionskammer **15** werden die oxidierbaren Bestandteile, die in dem zweiten Rohgasvolumenstrom **17** enthalten sind, oxidiert, wodurch der zweite Rohgasvolumenstrom **17** in einen zweiten Reingasvolumenstrom **21** umgewandelt wird. Die Oxidation der oxidierbaren Bestandteile muss nicht ausschließlich in der Reaktionskammer **15** stattfinden. Tatsächlich ist es eher so, dass die Oxidation an der Stelle einsetzt, an der der zweite Rohgasvolumenstrom die hier notwendige Reaktionstemperatur von ca. 850 °C erreicht (je nach konkretem Anwendungsfall können die Temperaturen von den hier angegebenen Werten deutlich abweichen). Die Reaktion kann beispielsweise bereits in der ersten Wärmespeichermasse **20** beginnen. Der zweite Reingasvolumenstrom **21** tritt sodann in eine zweite Wärmespeichermasse **22** ein. Diese weist eine niedrige Temperatur auf, sodass der zweite Reingasvolumenstrom **21,** der in etwa eine Temperatur von 850 °C aufweist, Wärmeenergie an die zweite Wärmespeichermasse **22** abgibt und sich dabei selbst abkühlt. Ausgehend von der zweiten Wärmespeichermasse **22,** die in einer zweiten Kammer **23** der RNV-Anlage **16** angeordnet ist, wird der zweite Reingasvolumenstrom **21** schließlich in einen zweiten Reingaskanal **24** geleitet, von wo aus er ebenfalls dem Kamin **12** und so schließlich der Umwelt zugeleitet wird.

Durch die Leitung des kühlen zweiten Rohgasvolumenstroms **17** durch die erste Wärmespeichermasse **20** und die Leitung des heißen zweiten Reingasvolumenstroms **21** durch die zweite Wärmespeichermasse **22** wird die erste Wärmespeichermasse **20** über die Zeit ausgekühlt und die zweite Wärmespeichermasse **22** aufgeheizt. Alsbald wird in der ersten Wärmespeichermasse **20** nur noch so wenig Wärmeenergie gespeichert sein, dass sie nicht mehr in der Lage ist, den ersten Rohgasvolumenstrom **17** stark genug aufzuheizen, sodass dieser seine Reaktionstemperatur erreicht. Im Gegenteil hierzu ist die zweite Wärmespeichermasse **22** bereits so stark durch das heiße Reingas aufgeheizt, dass sie diese Funktion der ersten Wärmespeichermasse **20** ohne Weiteres übernehmen kann. In dieser Situation wird die Durchströmungsrichtung der RNV-Anlage **16** umgekehrt. Das heißt, dass der zweite Rohgasvolumenstrom **17** fortan ausgehend von dem Rotor **5** zuerst in die zweite Kammer **23** und dort durch die zweite Wärmespeichermasse **22** geleitet wird, während der zweite Reingasvolumenstrom **21** ausgehend von der Reaktionskammer **15** durch die erste Wärmespeichermasse **20** geleitet wird. Die Umkehr der Durchströmungsrichtung erfolgt mittels einer Veränderung der Stellung von Sperrklappen **25,** die in entsprechenden Zu- bzw. Abführleitungen von Roh- und Reingas angeordnet sind.

Im Zuge der Umkehr der Durchströmungsrichtung wird Gas in den zweiten Reingaskanal **24** eingeleitet, welches noch mit oxidierbaren Bestandteilen belastet ist. Die Effekte, die dies verursachen, sind vorstehend ausführlich dargelegt. Dieser belastete Gasvolumenstrom würde - sofern nichts weiter unternommen würde - direkt über den zweiten Reingaskanal **24** in den Kamin **12** und von dort in die Umwelt gelangen. Um dies zu verhindern, ist es mittels der erfindungsgemäßen Vorrichtung möglich, den belasteten Gasvolumenstrom mittels eines Rezirkulationskanals **26** ausgehend von dem zweiten Reingaskanal **24** wieder auf den Rotor **5** zu leiten. Im vorliegenden Beispiel wird der belastete Gasvolumenstrom in den Rohgaskanal **4** eingeleitet. Um einen Austritt von belastetem Gas aus der Vorrichtung **2** zu unterbinden, wird während der Umkehr der Durchströmungsrichtung eine Sperrklappe **27** in dem zweiten Reingaskanal **24** verschlossen und eine weitere Sperrklappe **28** in dem Rezirkulationskanal **26** geöffnet. Erst wenn dies abgeschlossen ist, wird mit der Umkehr der Durchströmungsrichtung, das heißt der Verstellung der Sperrklappen **25** begonnen. Ein entstehender Kurzschluss zwischen der Zufuhr des zweiten Rohgasvolumenstroms **17** und dem zweiten Reingaskanal **24** tritt dabei zwar weiterhin auf, ist jedoch unschädlich.

Sobald die Umkehr der Durchströmungsrichtung abgeschlossen ist, werden die Sperrklappen **27, 28** wieder in ihre vorige Position überführt und der Betrieb der Vorrichtung **2** normal fortgesetzt. Der Rezirkulationskanal **26** ist sodann wieder ungenutzt.

Während der Dauer der Umkehr der Durchströmungsrichtung wird der sonstige Betrieb der Vorrichtung **2** nicht gestört. Somit wird die Vorrichtung **2** weiterhin mit dem Rohgasvolumenstrom **1** beschickt, der weiterhin in den ersten Rohgasvolumenstrom **8** und den Desorptionsvolumenstrom **9** aufgeteilt wird. Die Reinigung des ersten Rohgasvolumenstroms **8** mittels des Adsorbens wird ebenso aufrechterhalten, sodass fortwährend Reingas die Vorrichtung **2** verlässt. Gleichwohl findet während der Dauer der Umkehr der Durchströmungsrichtung aufgrund der Rezirkulation des belasteten Gasvolumenstroms eine Anreicherung von oxidierbaren Bestandteilen an dem Adsorbens statt, die effektiv nicht wieder abgeführt werden. Würde die Umkehr der Durchströmungsrichtung zu lange dauern, wäre die Kapazität des Adsorbens alsbald erreicht und das Adsorbens wäre nicht länger geeignet, den ersten Rohgasvolumenstrom **8** in den ersten Reingasvolumenstrom **10** umzuwandeln, das heißt die in dem ersten Rohgasvolumenstrom **8** gelösten oxidierbaren Bestandteile in ausreichendem Maß zu adsorbieren. Da die Umkehr der Durchströmungsrichtung jedoch nur eine kurze Zeit in Anspruch nimmt (ca. 20 Sekunden pro Vorgang), besteht diese Gefahr nicht. Das Adsorbens ist ohne Weiteres in der Lage, die erhöhte Zufuhr oxidierbarer Bestandteile über diesen begrenzten Zeitraum der Umkehr der Durchströmungsrichtung zu bewerkstelligen.

### Bezugszeichenliste

- 1: Rohgasvolumenstrom
- 2: Vorrichtung
- 3: Ventilator
- 4: Rohgaskanal
- 5: Rotor
- 6: Rotationsachse
- 7: Zweigstelle
- 8: Erster Rohgasvolumenstrom
- 9: Desorptionsvolumenstrom
- 10: Erster Reingasvolumenstrom
- 11: Erster Reingaskanal
- 12: Kamin
- 13: Warmer Bereich
- 14: Wärmetauscher
- 15: Reaktionskammer
- 16: RNV-Anlage
- 17: Zweiter Rohgasvolumenstrom
- 18: Ventilator
- 19: Erste Kammer
- 20: Erste Wärmespeichermasse
- 21: Zweiter Reingasvolumenstrom
- 22: Zweite Wärmespeichermasse
- 23: Zweite Kammer
- 24: Zweiter Reingaskanal
- 25: Sperrklappe
- 26: Rezirkulationskanal
- 27: Sperrklappe
- 28: Sperrklappe
- 29: Bypasskanal

## Patentansprüche

1. Verfahren zur Reinigung eines oxidierbare Bestandteile enthaltenden Rohgasvolumenstroms (1), bei dem ein erster Rohgasvolumenstrom (8) entlang einer Oberfläche eines Adsorbens geleitet wird, wobei sich oxidierbare Bestandteile des ersten Rohgasvolumenstroms (8) an das Adsorbens anlagern, wodurch der erste Rohgasvolumenstrom (8) in einen ersten Reingasvolumenstrom (10) umgewandelt wird, wobei die sich an das Adsorbens angelagerten oxidierbaren Bestandteile zu einem späteren Zeitpunkt mittels eines Desorptionsvolumenstroms (9) von dem Adsorbens desorbiert werden, wodurch der Desorptionsvolumenstrom (9) in einen zweiten Rohgasvolumenstrom (17), der kleiner ist als der erste Rohgasvolumenstrom, umgewandelt wird, wobei des Weiteren der zweite Rohgasvolumenstrom (17) durch eine erste Wärmespeichermasse (20) geleitet wird, wodurch die Temperatur des zweiten Rohgasvolumenstroms (17) erhöht wird, anschließend der zweite Rohgasvolumenstrom (17) in eine Reaktionskammer (15) geleitet wird, in der die in dem zweiten Rohgasvolumenstrom (17) befindlichen oxidierbaren Bestandteile oxidiert werden, wodurch der zweite Rohgasvolumenstrom (17) in einen zweiten Reingasvolumenstrom (21) umgewandelt wird, wobei der zweite Reingasvolumenstrom (21) danach zumindest teilweise durch eine zweite Wärmespeichermasse (22) geleitet wird, wodurch die Temperatur des durch die zweite Wärmespeichermasse (22) geleiteten Anteils des zweiten Reingasvolumenstroms (21) erniedrigt wird, und der zweite Reingasvolumenstrom (21) in einen Reingaskanal (24) eingeleitet wird, wobei die Durchströmungsrichtung der ersten Wärmespeichermasse (20), der Reaktionskammer (15) und der zweiten Wärmespeichermasse (22) periodisch umgekehrt wird, wobei das Adsorbens zumindest während eines Teils der Dauer eines Vorgangs der Umkehrung der Durchströmungsrichtung als Zwischenspeicher für eine Menge oxidierbarer Bestandteile verwendet wird, wobei ein auf die Masse des Adsorbens bezogener Beladungsgrad zumindest eines Teils des Adsorbens mit oxidierbaren Bestandteilen nach der Verwendung des Adsorbens als Zwischenspeicher höher ist, als ein maximaler Beladungsgrad ohne eine solche Verwendung des Adsorbens als Zwischenspeicher, **dadurch gekennzeichnet, dass** zumindest während eines Teils der Dauer des Vorgangs der Umkehrung der Durchströmungsrichtung der in den Reingaskanal (24) eingeleitete Gasvolumenstrom dem ersten Rohgasvolumenstrom (8) zugeleitet und gemeinsam mit diesem entlang der Oberfläche des Adsorbens geleitet wird, wodurch sich die in dem Gasvolumenstrom enthaltenen oxidierbaren Bestandteile an das Adsorbens anlagern.

2. Verfahren nach Anspruch 1,
**dadurch gekennzeichnet, dass** der in den Reingaskanal (24) eingeleitete Gasvolumenstrom durchgehend entlang einer Oberfläche des Adsorbens geleitet wird, wodurch sich in dem Gasvolumenstrom enthaltene oxidierbare Bestandteile an das Adsorbens anlagern.

3. Verfahren nach einem der Ansprüche 1 bis 2, **dadurch gekennzeichnet, dass** eine
durch Desorption der oxidierbaren Bestandteile von dem Adsorbens erfolgende Erzeugung des zweiten Rohgasvolumenstroms (17) zumindest während eines Teils der Dauer der Umkehrung der Durchströmungsrichtung unterbrochen und die erste Wärmespeichermasse (20) und/oder die zweite Wärmespeichermasse (22) mittels eines Spülgasvolumenstroms (30) gespült werden, wobei eine Adsorption der in dem ersten Rohgasvolumenstrom (8) enthaltenen oxidierbaren Bestandteile an das Adsorbens währenddessen weitergeführt wird.

4. Verfahren nach einem der Ansprüche 1 bis 3,
**dadurch gekennzeichnet, dass** der Desorptionsvolumenstrom (9) von einem Anteil des Rohgasvolumenstroms (1) gebildet wird.

5. Verfahren nach einem der Ansprüche 1 bis 4,
**dadurch gekennzeichnet, dass** der Desorptionsvolumenstrom (9), vorzugsweise auf mindestens 100 °C, weiter vorzugsweise auf mindestens 120 °C, erwärmt wird.

6. Verfahren nach Anspruch 5,
**dadurch gekennzeichnet, dass** der Desorptionsvolumenstrom (9) mittels Wärmeenergie zumindest eines Anteils des zweiten Reingasvolumenstroms (21) erwärmt wird, wobei der Anteil des zweiten Reingasvolumenstroms (21) vorzugsweise mittels eines Bypasskanals (29) aus der Reaktionskammer (15) entnommen wird.

7. Vorrichtung (2, 2') zur Reinigung eines oxidierbare Bestandteile enthaltenen Rohgasvolumenstroms (1), umfassend ein Adsorbens, eine erste Wärmespeichermasse (20), eine Reaktionskammer (15) sowie eine zweite Wärmespeichermasse (22), wobei ein erster Rohgasvolumenstrom (8) mittels eines Rohgaskanals (4) dem Adsorbens zuleitbar und derart entlang einer Oberfläche des Adsorbens leitbar ist, dass in dem ersten Rohgasvolumenstrom (8) befindliche oxidierbare Bestandteile an dem Adsorbens anlagerbar sind, wodurch der erste Rohgasvolumenstrom (8) in einen ersten Reingasvolumenstrom (10) umwandelbar ist, wobei an dem Adsorbens angelagerte oxidierbare Bestandteile mittels eines Desorptionsvolumenstroms (9) derart von dem Adsorbens desorbierbar sind, dass der Desorptionsvolumenstrom (9) in einen zweiten Rohgasvolumenstrom (17) umwandelbar ist, wobei der zweite Rohgasvolumenstrom (17) in die erste Wärmespeichermasse (20) leitbar ist, sodass eine Temperatur des zweiten Rohgasvolumenstroms (17) erhöhbar ist, anschließend der zweite Rohgasvolumenstrom (17) in die Reaktionskammer (15) leitbar ist, in der die in dem zweiten Rohgasvolumenstrom (17) befindlichen oxidierbaren Bestandteile derart oxidierbar sind, dass der zweite Rohgasvolumenstrom (17) in einen zweiten Reingasvolumenstrom (21) umwandelbar ist, wobei der zweite Reingasvolumenstrom (21) zumindest teilweise in eine zweite Wärmespeichermasse (22) leitbar ist, sodass eine Temperatur eines in die zweite Wärmespeichermasse (22) geleiteten Anteils des zweiten Reingasvolumenstroms (21) erniedrigbar ist, und der zweite Reingasvolumenstrom (21) in einen Reingaskanal (24) einleitbar ist, wobei eine Durchströmungsrichtung der ersten Wärmespeichermasse (20), der Reaktionskammer (15) und der zweiten Wärmespeichermasse (22) periodisch umkehrbar ist, wobei zumindest während eines Teils der Dauer eines Vorgangs der Umkehrung der Durchströmungsrichtung das Adsorbens als Zwischenspeicher für eine Menge oxidierbarer Bestandteile verwendbar ist, wobei ein auf die Masse des Adsorbens bezogener Beladungsgrad zumindest eines Teils des Adsorbens mit oxidierbaren Bestandteilen nach der Verwendung des Adsorbens als Zwischenspeicher höher ist, als ein maximaler Beladungsgrad ohne eine solche Verwendung des Adsorbens als Zwischenspeicher, **gekennzeichnet durch** einen Rezirkulationskanal (26), mittels dessen ein in dem Reingaskanal (24) befindlicher Gasvolumenstrom dem Rohgaskanal (4) zuleitbar ist und mittels des Rohgaskanals (4) derart auf das Adsorbens führbar ist, dass der Gasvolumenstrom entlang einer Oberfläche des Adsorbens geleitet wird.

8. Vorrichtung (2') nach Anspruch 7,
**dadurch gekennzeichnet, dass** zumindest während eines Teils der Dauer eines Vorgangs der Umkehrung der Durchströmungsrichtung der ersten Wärmespeichermasse (20) und/oder der zweiten Wärmespeichermasse (22) ein Spülgasvolumenstrom (30) zuführbar ist, wobei in einem Zeitraum der Zuführung des Spülgasvolumenstroms (30) der zweite Rohgasvolumenstrom (17) auf Null reduzierbar ist.

9. Vorrichtung (2, 2') nach einem der Ansprüche 7 oder 8,
**gekennzeichnet durch** einen Bypasskanal (29), mittels dessen zumindest ein Anteil des zweiten Reingasvolumenstroms (21) der Reaktionskammer (15) entnehmbar ist, wobei vorzugsweise der mittels des Bypasskanals (29) entnommene Anteil des zweiten Reingasvolumenstroms (21) einem Wärmetauscher (14) oder einer Mischkammer zuführbar ist, wobei mittels des Wärmetauschers (14) bzw. der Mischkammer Wärmeenergie zwischen dem Anteil des zweiten Reingasvolumenstroms (21) und dem Desorptionsvolumenstrom (9) austauschbar ist.

10. Vorrichtung (2, 2') nach einem der Ansprüche 7 bis 9,
**dadurch gekennzeichnet, dass** das Adsorbens auf einem Rotor (5) angeordnet ist, der derart um eine Rotationsachse (6) rotierbar ist, dass der erste Rohgasvolumenstrom (8) und/oder der Desorptionsvolumenstrom (9) je nach Stellung des Rotors (5) entlang verschiedener Oberflächen des Adsorbens leitbar ist, wobei vorzugsweise der erste Rohgasvolumenstrom (8) und der Desorptionsvolumenstrom (9) in jedem Fall entlang unterschiedlicher Oberflächen des Adsorbens strömen.

11. Vorrichtung nach einem der Ansprüche 7 bis 10,
**dadurch gekennzeichnet, dass** das Adsorbens auf einem Festbett angeordnet ist, wobei der erste Rohgasvolumenstrom (8) und/oder der Desorptionsvolumenstrom (9) derart auf das Adsorbens leitbar sind, dass sie über die Zeit entlang wechselnder Oberflächen des Adsorbens strömen, wobei vorzugsweise der erste Rohgasvolumenstrom (8) und der Desorptionsvolumenstrom (9) in jedem Fall entlang unterschiedlicher Oberflächen des Adsorbens strömen.

12. Vorrichtung nach einem der Ansprüche 7 bis 11,
**gekennzeichnet durch** ein Heizregister, mittels dessen der Desorptionsvolumenstrom (9), vorzugsweise auf mindestens 100 °C, weiter vorzugsweise mindestens 120 °C, erwärmbar ist.

## Claims

1. A method for purifying a volumetric flow of raw gas (1) containing oxidizable components, in which a first volumetric flow of raw gas (8) is passed over a surface of an adsorbent, wherein oxidizable components of the first volumetric flow of raw gas (8) are deposited on the adsorbent, whereupon the first volumetric flow of raw gas (8) is converted into a first volumetric flow of purified gas (10), wherein the oxidizable components deposited on the adsorbent are desorbed from the adsorbent at a later point in time by means of a volumetric flow of desorbent (9), whereupon the volumetric flow of desorbent (9) is converted into a second volumetric flow of raw gas (17) which is smaller than the first volumetric flow of raw gas, wherein furthermore, the second volumetric flow of raw gas (17) is passed through a first heat storage mass (20), whereupon the temperature of the second volumetric flow of raw gas (17) is raised, then the second volumetric flow of raw gas (17) is passed into a reaction chamber (15) in which the oxidizable components in the second volumetric flow of raw gas (17) are oxidized, whereupon the second volumetric flow of raw gas (17) is converted into a second volumetric flow of purified gas (21), wherein at least a portion of the second volumetric flow of purified gas (21) is subsequently passed through a second heat storage mass (22), whereupon the temperature of the fraction of the second volumetric flow of purified gas (21) passed through the second heat storage mass (22) is reduced, and the second volumetric flow of purified gas (21) is introduced into a purified gas line (24), wherein the direction of flow for the first heat storage mass (20), the reaction chamber (15) and the second heat storage mass (22) is periodically reversed, wherein at least during a fraction of the duration of a procedure for reversing the direction of flow, the adsorbent is used as a buffer for a quantity of oxidizable components wherein, after using the adsorbent as a buffer, a load factor with respect to the mass of the adsorbent of at least a fraction of the adsorbent with oxidizable components is greater than a maximum load factor without using the adsorbent in this manner as a buffer, **characterized in that** at least during a fraction of the duration of the procedure for reversing the direction of flow, the volumetric flow of gas introduced into the purified gas line (24) is fed into the first volumetric flow of raw gas (8) and passed together therewith over the surface of the adsorbent, whereupon oxidizable components contained in the volumetric flow of gas are deposited onto the adsorbent.

2. The method according to claim 1,
**characterized in that** the volumetric flow of gas introduced into the purified gas line (24) is passed continuously over a surface of the adsorbent, whereupon oxidizable components contained in the volumetric flow of gas are deposited onto the adsorbent.

3. The method according to claim 1 or 2,
**characterized in that** production of the second volumetric flow of raw gas (17) by desorption of the oxidizable components from the adsorbent is interrupted at least during a fraction of the duration of the reversal of the direction of flow and the first heat storage mass (20) and/or the second heat storage mass (22) are flushed by means of a volumetric flow of flushing gas (30), wherein an adsorption of the oxidizable components contained in the first volumetric flow of raw gas (8) onto the adsorbent is continued in the meantime.

4. The method according to any one of claims 1 to 3,
**characterized in that** the volumetric flow of desorbent (9) is formed by a fraction of the volumetric flow of raw gas (1).

5. The method according to any one of claims 1 to 4,
**characterized in that** the volumetric flow of desorbent (9) is heated, preferably to at least 100 °C, more preferably to at least 120 °C.

6. The method according to claim 5,
**characterized in that** the volumetric flow of desorbent (9) is heated by means of heat energy of at least a fraction of the second volumetric flow of purified gas (21), wherein the fraction of the second volumetric flow of purified gas (21) is preferably removed from the reaction chamber (15) by means of a bypass line (29).

7. A device (2, 2') for purifying a volumetric flow of raw gas (1) containing oxidizable components, comprising an adsorbent, a first heat storage mass (20), a reaction chamber (15) as well as a second heat storage mass (22), wherein a first volumetric flow of raw gas (8) can be passed into the adsorbent by means of a raw gas line (4) and in this manner be passed over a surface of the adsorbent, in a manner such that oxidizable components in the first volumetric flow of raw gas (8) can become deposited on the adsorbent, whereupon the first volumetric flow of raw gas (8) can be converted into a first volumetric flow of purified gas (10), wherein oxidizable components deposited on the adsorbent can be desorbed from the adsorbent by means of a volumetric flow of desorbent (9) in a manner such that the volumetric flow of desorbent (9) can be converted into a second volumetric flow of raw gas (17), wherein the second volumetric flow of raw gas (17) can be passed into the first heat storage mass (20), so that a temperature of the second volumetric flow of raw gas (17) can be raised, and subsequently the second volumetric flow of raw gas (17) can be passed into the reaction chamber (15), in which the oxidizable components in the second volumetric flow of raw gas (17) can be oxidized in a manner such that the second volumetric flow of raw gas (17) can be converted into a second volumetric flow of purified gas (21), wherein at least a portion of the second volumetric flow of purified gas (21) can be passed into a second heat storage mass (22) such that a temperature of a fraction of the second volumetric flow of purified gas (21) passed into the second heat storage mass (22) can be reduced, and the second volumetric flow of purified gas (21) can be passed into a purified gas line (24), wherein a direction of flow for the first heat storage mass (20), the reaction chamber (15) and the second heat storage mass (22) can be periodically reversed, wherein at least during a portion of the duration of a procedure for reversing the direction of flow, the adsorbent can be used as a buffer for a quantity of oxidizable components wherein, after using the adsorbent as a buffer, a load factor with respect to the mass of the adsorbent of a portion of the adsorbent with oxidizable components is greater than a maximum load factor without such a use of the adsorbent as a buffer, **characterized by** a recirculation line (26) by means of which a volumetric flow of gas in the purified gas line (24) can be fed to the raw gas line (4) and in this manner can be passed by means of the raw gas line (4) to the adsorbent such that the volumetric flow of gas is passed over a surface of the adsorbent.

8. The device (2') according to claim 7,
**characterized in that** at least during a fraction of the duration of a procedure for reversing the direction of flow of the first heat storage mass (20) and/or the second heat storage mass (22), a volumetric flow of flushing gas (30) can be supplied, wherein during the period of time for supplying the volumetric flow of flushing gas (30), the second volumetric flow of raw gas (17) can be reduced to zero.

9. The device (2, 2') according to claim 7 or 8,
**characterized by** a bypass line (29) by means of which at least a fraction of the second volumetric flow of purified gas (21) can be removed from the reaction chamber (15), wherein preferably, the fraction of the second volumetric flow of purified gas (21) removed by means of the bypass line (29) can be passed into a heat exchanger (14) or to a mixing chamber wherein, by means of the heat exchanger (14) or the mixing chamber, heat energy can be exchanged between the fraction of the second volumetric flow of purified gas (21) and the volumetric flow of desorbent (9).

10. The device (2, 2') according to any one of claims 7 to 9,
**characterized in that** the adsorbent is disposed on a rotor (5) which can be rotated about an axis of rotation (6) in a manner such that, depending on the setting of the rotor (5), the first volumetric flow of raw gas (8) and/or the volumetric flow of desorbent (9) can be passed over different surfaces of the adsorbent, wherein preferably, in each case, the first volumetric flow of raw gas (8) and the volumetric flow of desorbent (9) flow over different surfaces of the adsorbent.

11. The device according to any one of claims 7 to 10,
**characterized in that** the adsorbent is disposed in a fixed bed, wherein the first volumetric flow of raw gas (8) and/or the volumetric flow of desorbent (9) can be passed over the adsorbent in a manner such that over time they flow over changing surfaces of the adsorbent, wherein preferably, in each case, the first volumetric flow of raw gas (8) and the volumetric flow of desorbent (9) flow over different surfaces of the adsorbent.

12. The device according to any one of claims 7 to 11,
**characterized by** a heat register by means of which the volumetric flow of desorbent (9) can be heated, preferably to at least 100 °C, more preferably to at least 120 °C.

## Revendications

1. Procédé destiné à purifier un flux volumétrique de gaz brut (1) contenant des composants oxydables, lors duquel on dirige un premier flux volumétrique de gaz brut (8) le long d'une surface d'un adsorbant, des composants oxydables du premier flux volumétrique de gaz brut (8) se fixant sur l'adsorbant, suite à quoi le premier flux volumétrique de gaz brut (8) se transforme en un flux volumétrique de gaz purifié (10), les composants oxydables qui se fixent sur l'absorbant étant désorbés ultérieurement de l'adsorbant au moyen d'un flux volumétrique de désorption (9), suite à quoi le flux volumétrique de désorption (9) se transforme dans un deuxième flux volumétrique de gaz brut (17) qui est inférieur au premier flux volumétrique de gaz brut, par ailleurs, le deuxième flux volumétrique de gaz brut (17) est dirigé à travers une première masse d'accumulation thermique (20), suite à quoi la température du deuxième flux volumétrique de gaz brut (17) monte, par la suite, le deuxième flux volumétrique de gaz brut (17) est dirigé dans une chambre de réaction (15) dans laquelle les composants oxydables qui se trouvent dans le deuxième flux volumétrique de gaz brut (17) s'oxydent, suite à quoi le deuxième flux volumétrique de gaz brut (17) se transforme en un deuxième flux volumétrique de gaz purifié (21), le deuxième flux volumétrique de gaz purifié (21) étant dirigé par la suite à travers une deuxième masse d'accumulation thermique (22), suite à quoi la température de la part du deuxième flux volumétrique de gaz purifié (21) qui est dirigée à travers la deuxième masse d'accumulation thermique (22) baisse et le deuxième flux volumétrique de gaz purifié (21) est introduit dans un canal de gaz purifié (24), la direction de passage à travers la première masse d'accumulation thermique (20), la chambre de réaction (15) et la deuxième masse d'accumulation thermique (22) étant périodiquement inversée, au moins pendant une partie de la durée d'un processus de l'inversion de la direction de passage, l'adsorbant étant utilisé en tant qu'accumulateur intermédiaire pour une quantité de composants oxydables, après l'utilisation de l'adsorbant en tant qu'accumulateur intermédiaire, un taux de charge en composants oxydables rapporté à la masse de l'adsorbant d'au moins une partie de l'adsorbant étant plus élevé qu'un taux de charge maximal sans une telle utilisation de l'adsorbant en tant qu'accumulateur intermédiaire, **caractérisé en ce qu'**au moins pendant une partie de la durée du processus de l'inversion de la direction de passage, le flux volumétrique de gaz introduit dans le canal de gaz purifié (24) est ajouté au premier flux volumétrique de gaz brut (8) et en commun avec celui-ci, est dirigé le long de la surface de l'adsorbant, suite à quoi, les composants oxydables contenus dans le flux volumétrique de gaz se fixent sur l'adsorbant.

2. Procédé selon la revendication 1,
**caractérisé en ce que** le flux volumétrique de gaz introduit dans le canal de gaz purifié (24) est dirigé en continu le long d'une surface de l'adsorbant, suite à quoi des composants oxydables contenus dans le flux volumétrique de gaz se fixent sur l'adsorbant.

3. Procédé selon l'une quelconque des revendications 1 à 2,
**caractérisé en ce qu'**une création du deuxième flux volumétrique de gaz brut (17) s'effectuant par désorption des composants oxydables de l'adsorbant est interrompue au moins pendant une partie de la durée de l'inversion de la direction de passage et la première masse d'accumulation thermique (20) et/ou la deuxième masse d'accumulation thermique (22) sont lavées au moyen d'un flux volumétrique de gaz de lavage (30), une adsorption des composants oxydables contenus dans le premier flux volumétrique de gaz brut (8) sur l'adsorbant étant poursuivie pendant ce temps.

4. Procédé selon l'une quelconque des revendications 1 à 3,
**caractérisé en ce que** le flux volumétrique de désorption (9) est formé par une part du flux volumétrique de gaz brut (1).

5. Procédé selon l'une quelconque des revendications 1 à 4,
**caractérisé en ce qu'**on chauffe le flux volumétrique de désorption (9) de préférence à au moins 100 °C, de manière plus préférée à au moins 120 °C.

6. Procédé selon la revendication 5,
**caractérisé en ce qu'**on chauffe le flux volumétrique de désorption (9) au moyen d'énergie thermique d'au moins une part du deuxième flux volumétrique de gaz purifié (21), la part du deuxième flux volumétrique de gaz purifié (21) étant prélevée de préférence au moyen d'un canal de dérivation (29) hors de la chambre de réaction (15).

7. Dispositif (2, 2') destiné à purifier un flux volumétrique de gaz brut (1) contenant des composants oxydables, comprenant un adsorbant, une première masse d'accumulation thermique (20), une chambre de réaction (15), ainsi qu'une deuxième masse d'accumulation thermique (22), un premier flux volumétrique de gaz brut (8) pouvant être ajouté à l'adsorbant au moyen d'un canal de gaz brut (4) et dirigé le long d'une surface de l'adsorbant de telle sorte que des composants oxydables se trouvant dans le premier flux volumétrique de gaz brut (8) puissent se fixer sur l'adsorbant, suite à quoi le premier flux volumétrique de gaz brut (8) peut se transformer en un premier flux volumétrique de gaz purifié (10), des composants oxydables fixés sur l'adsorbant pouvant se désorber de l'adsorbant au moyen d'un flux volumétrique de désorption (9) de telle sorte que le flux volumétrique de désorption (9) puisse se transformer en un deuxième flux volumétrique de gaz brut (17), le deuxième flux volumétrique de gaz brut (17) pouvant être dirigé dans la première masse d'accumulation thermique (20), de sorte qu'une température du deuxième flux volumétrique de gaz brut (17) puisse s'élever, qu'ensuite le deuxième flux volumétrique de gaz brut (17) puisse être dirigé dans la chambre de réaction (15), dans laquelle les composants oxydables se trouvant dans le deuxième flux volumétrique de gaz brut (17) sont oxydables de telle sorte que le deuxième flux volumétrique de gaz brut (17) puisse se transformer en un deuxième flux volumétrique de gaz purifié (21), le deuxième flux volumétrique de gaz purifié (21) pouvant être dirigé au moins en partie dans une deuxième masse d'accumulation thermique (22), de sorte qu'une température d'une part du deuxième flux volumétrique de gaz purifié (21) dirigée dans la deuxième masse d'accumulation thermique (22) puisse baisser et le deuxième flux volumétrique de gaz purifié (21) puisse être dirigé dans un canal de gaz purifié (24), une direction de passage à travers la première masse d'accumulation thermique (20), la chambre de réaction (15) et la deuxième masse d'accumulation thermique (22) étant périodiquement inversable, au moins pendant une partie de la durée d'un processus de l'inversion de la direction de passage, l'adsorbant étant utilisable en tant qu'accumulateur intermédiaire pour une quantité de composants oxydables, après l'utilisation de l'adsorbant en tant qu'accumulateur intermédiaire, un taux de charge en composants oxydables rapporté à la masse de l'adsorbant d'au moins une partie de l'adsorbant étant plus élevé qu'un taux de charge maximal sans une telle utilisation de l'adsorbant en tant qu'accumulateur intermédiaire, **caractérisé par** un canal de recirculation (26), au moyen duquel un flux volumétrique de gaz se trouvant dans le canal de gaz purifié (24) peut être dirigé dans un canal de gaz brut (4) et au moyen du canal de gaz brut (4), peut être dirigé sur l'adsorbant de telle sorte que le flux volumétrique de gaz soit dirigé le long d'une surface de l'adsorbant.

8. Dispositif (2') selon la revendication 7,
**caractérisé en ce qu'**au moins pendant une partie de la durée d'un processus de l'inversion de la direction de passage à travers la première masse d'accumulation thermique (20) et/ou de la deuxième masse d'accumulation thermique (22), un flux volumétrique de gaz de lavage (30) peut être alimenté, pendant une période de l'alimentation du flux volumétrique de gaz de lavage (30), le deuxième flux volumétrique de gaz brut (17) pouvant être réduit à zéro.

9. Dispositif (2, 2') selon l'une quelconque des revendications 7 ou 8,
**caractérisé par** un canal de dérivation (29) au moyen duquel au moins une part du deuxième flux volumétrique de gaz purifié (21) peut être prélevée dans la chambre de réaction (15), de préférence la part du deuxième flux volumétrique de gaz purifié (21) prélevée au moyen du canal de dérivation (29) pouvant être alimentée vers un échangeur thermique (14) ou vers une chambre de mélange, au moyen de l'échangeur thermique (14) ou de la chambre de mélange, de l'énergie thermique pouvant être échangée entre la part du deuxième flux volumétrique de gaz purifié (21) et le flux volumétrique de désorption (9).

10. Dispositif (2, 2') selon l'une quelconque des revendications 7 à 9,
**caractérisé en ce que** l'adsorbant est placé sur un rotor (5) qui est rotatif autour d'un axe de rotation (6), de telle sorte qu'en fonction de la position du rotor (5), le premier flux volumétrique de gaz brut (8) et/ou le flux volumétrique de désorption (9) puisse être dirigé le long de différentes surfaces de l'adsorbant, de préférence le premier flux volumétrique de gaz brut (8) et le flux volumétrique de désorption (9) s'écoulent dans tous les cas le long de différentes surfaces.

11. Dispositif selon l'une quelconque des revendications 7 à 10,
**caractérisé en ce que** l'adsorbant est placé sur un lit fixe, le premier flux volumétrique de gaz brut (8) et/ou le flux volumétrique de désorption (9) pouvant être dirigé sur l'adsorbant de telle sorte que sur le temps, ils s'écoulent le long de surfaces changeantes de l'adsorbant, de préférence le premier flux volumétrique de gaz brut (8) et le flux volumétrique de désorption (9) s'écoulant dans tous les cas le long de différentes surfaces de l'adsorbant.

12. Dispositif selon l'une quelconque des revendications 7 à 11,
**caractérisé par** un registre de tirage au moyen duquel le flux volumétrique de désorption (9) peut être chauffé de préférence à au moins 100 °C, de manière plus préférée à au moins 120 °C.
